# EUROPEAN PATENT APPLICATION

(11) **EP 4 768 992 A1**
(43) Date of publication of application: **01.07.2026**
(21) Application number: 25221022.4
(22) Date of filing: 05.12.2025
(51) Int. Cl.: G01S 19/21

(54) **DUAL ANTENNA INTERFERENCE LOCALIZATION USING PHASE DIFFERENCE MEASUREMENTS**

(30) Priority: 31.12.2024 US 202419007293
(71) Applicant: Trimble Inc, Westminster CO 80021 (US)
(72) Inventor: BACKEN, Staffan, Westminster, 80021 (US); WEISENBURGER, Shawn, Westminster, 80021 (US); CLARE, Adam, Westminster, 80021 (US)
(74) Representative: AWA Sweden AB

(57) **Abstract**

Described herein are systems, methods, and other techniques for localizing an interference signal relative to a GNSS receiver. A method includes collecting a first phase difference measurement using first and second antennas and a first angle measurement using an inertial sensor. The method includes collecting a second phase difference measurement using the first and second antennas and a second angle measurement using the inertial sensor. The method includes searching a phase difference map using the first and second phase difference measurements and an angle offset between the first and second angle measurements to identify a compatible set of phase differences in the phase difference map. The angle of arrival of the interference signal is estimated based on indices of the compatible set of phase differences in the phase difference map.

## Description

### BACKGROUND OF THE INVENTION

Global navigation satellite systems (GNSS) are systems that use medium Earth orbit (MEO) or geosynchronous orbit (GEO) satellites to provide geospatial positioning of receiving devices. Typically, wireless signals transmitted from such satellites can be used by GNSS receivers to determine their position, velocity, and time. Examples of currently operational GNSSs include the United States' Global Positioning System (GPS), Russia's Global Navigation Satellite System (GLONASS), China's BeiDou Satellite Navigation System, the European Union's (EU) Galileo, Japan's Quasi-Zenith Satellite System (QZSS), and the Indian Regional Navigation Satellite System (IRNSS). Today, GNSS receivers are used in a wide range of applications, including navigation (e.g., for automobiles, planes, boats, persons, animals, freight, military precision-guided munitions, etc.), surveying, mapping, and time referencing.

The accuracy of GNSS receivers has improved drastically over the past few decades due to several technological improvements. One such improvement is the use of differential measurement techniques, in which GNSS signals received by a fixed receiver are used to generate correction data that is communicated to a mobile receiver. Typically, a roving receiver (or simply "rover") receives the correction data from a reference source or base station that already knows its exact location, in addition to receiving signals from GNSS satellites. To generate the correction data, the base station first tracks all the satellites in view and measures their pseudoranges. Next, the base station computes its position and compares the computed position to its known position to generate a list of corrections needed to make the measured pseudorange values accurate for all visible satellites. The correction data is then communicated to the rover, which applies these corrections to its computed pseudoranges to produce a more accurate position. This technique may be referred to as differential GNSS.

Another improvement to GNSS accuracy came through the use of real-time kinematic (RTK) measurement techniques, in which the rover determines its position relative to a base station by comparing the phases of carrier waves received at the rover with those measured at the base station. Multiple satellite signals transmitted by GNSS satellites are used to measure these carrier phases. Once the rover receives a set of carrier phases from the base station, it compares them with its own set of carrier phases. This comparison allows the rover to calculate a vector between itself and the base station. With the known coordinates of the base station, which can be communicated to the rover by the base station, the rover can compute its precise location within a specific coordinate frame. The carrier signal used in RTK has a shorter wavelength than the width of a PRN code, enabling more accurate distance measurement. RTK enables fast and centimeter-level positioning anywhere within a large area.

Another positioning technology was developed and referred to as real-time extended (RTX), which also provides centimeter-level positioning without the need for a local base station. RTX relies on a network of reference stations strategically located around the world. These reference stations continuously collect precise GNSS data and monitor satellite signals. The data collected by the reference stations is sent to a centralized processing center. In the processing center, advanced algorithms and models are employed to compute highly accurate corrections for satellite orbits, clock errors, and atmospheric conditions. The computed correction data is communicated to the rover via satellites (which act as relay stations) or via cellular or IP networks. The rover receives these correction signals and uses them to enhance its position calculation in real-time by accounting for systematic errors and distortions present in the GNSS signals.

### SUMMARY OF THE INVENTION

The present disclosure generally relates to interference localization, and more particularly to a method of localizing the source of interference using a dual antenna global navigation satellite system (GNSS) receiver and an inertial measurement unit (IMU). The described techniques can determine a direction or angle of arrival of the interference signal based on phase difference measurements captured by the GNSS receiver's antennas and angle measurements captured by the IMU. The described techniques are suitable for situations in which GNSS positioning is completely denied by the interference signal.

A summary of the various embodiments of the invention is provided below as a list of examples. As used below, any reference to a series of examples is to be understood as a reference to each of those examples disjunctively (e.g., "Examples 1-4" is to be understood as "Examples 1, 2, 3, or 4").

Example 1 is a method of localizing an interference signal relative to a global navigation satellite system (GNSS) receiver, the method comprising: collecting, at a first time, a first phase difference measurement using a first antenna and a second antenna of the GNSS receiver and a first angle measurement using an inertial sensor of the GNSS receiver; collecting, at a second time after the first time and after the GNSS receiver has been at least partially moved or rotated, a second phase difference measurement using the first antenna and the second antenna and a second angle measurement using the inertial sensor; computing an angle offset between the first angle measurement and second angle measurement; searching a phase difference map using the first phase difference measurement, the second phase difference measurement, and the angle offset to identify a compatible set of phase differences in the phase difference map, the phase difference map including a plurality of phase differences indexed by vertical and/or horizontal angles and/or phase differences as a function of azimuth and elevation angles, wherein the compatible set of phase differences are separated in the phase difference map by the angle offset; and estimating, based on the compatible set of phase differences, an angle of arrival of the interference signal relative to the GNSS receiver. In this description we are using the phase difference to describe the difference between two signals. This can be extended to a gain and phase difference using a complex value, where the difference between two complex values is the absolute value of the result. This can improve the performance in some situations but is omitted below for clarity.

Example 2 is the method of example(s) 1, further comprising: storing the phase difference map at a memory of the GNSS receiver, the phase difference map having been obtained through a calibration process or from electromagnetic simulations.

Example 3 is the method of example(s) 1-2, further wherein estimating the angle of arrival of the interference signal based on the compatible set of phase differences includes determining the vertical and/or horizontal angles that correspond to the compatible set of phase differences in the phase difference map.

Example 4 is the method of example(s) 1-3, wherein the angle of arrival of the interference signal include one or both of a horizontal angle and a vertical angle.

Example 5 is the method of example(s) 1-4, wherein the angle offset includes one or both of a horizontal angle offset and a vertical angle offset.

Example 6 is the method of example(s) 1-5, wherein searching the phase difference map to identify the compatible set of phase differences includes: for each of a plurality of candidate sets of phase differences in the phase difference map: computing a first error between the first phase difference measurement and a first phase difference from the plurality of phase differences; computing a second error between the second phase difference measurement and a second phase difference from the plurality of phase differences, the second phase difference being separated from the first phase difference in the phase difference map by the angle offset; and computing a combined error by combining the first error and the second error; and identifying the compatible set of phase differences as having the combined error being the minimum value of the plurality of candidate sets of phase differences.

Example 7 is the method of example(s) 1-6, wherein the inertial sensor is an inertial measurement unit (IMU) mounted to the GNSS receiver.

Example 8 is the method of example(s) 1-7, further comprising: causing the angles of arrival of the interference signal to be displayed on a display of a user device.

Example 9 is a non-transitory computer-readable medium comprising instructions that, when executed by one or more processors, cause the one or more processors to perform operations for localizing an interference signal relative to a global navigation satellite system (GNSS) receiver, the operations comprising: collecting, at a first time, a first phase difference measurement using a first antenna and a second antenna of the GNSS receiver and a first angle measurement using an inertial sensor of the GNSS receiver; collecting, at a second time after the first time and after the GNSS receiver has been at least partially moved or rotated, a second phase difference measurement using the first antenna and the second antenna and a second angle measurement using the inertial sensor; computing an angle offset between the first angle measurement and second angle measurement; searching a phase difference map using the first phase difference measurement, the second phase difference measurement, and the angle offset to identify a compatible set of phase differences in the phase difference map, the phase difference map including a plurality of phase differences as a function of vertical and/or horizontal angles, wherein the compatible set of phase differences are separated in the phase difference map by the angle offset; and estimating, based on the compatible set of phase differences, an angle of arrival of the interference signal relative to the GNSS receiver.

Example 10 is the non-transitory computer-readable medium of example(s) 9, wherein the operations further comprise: storing the phase difference map at a memory of the GNSS receiver, the phase difference map having been obtained through a calibration process.

Example 11 is the non-transitory computer-readable medium of example(s) 9-10, further wherein estimating the angle of arrival of the interference signal based on the compatible set of phase differences includes determining the vertical and/or horizontal angles that index the compatible set of phase differences in the phase difference map.

Example 12 is the non-transitory computer-readable medium of example(s) 9-11, wherein the angle of arrival of the interference signal include one or both of a horizontal angle and a vertical angle, and wherein the angle offset includes one or both of a horizontal angle offset and a vertical angle offset.

Example 13 is the non-transitory computer-readable medium of example(s) 9-12, wherein searching the phase difference map to identify the compatible set of phase differences includes: for each of a plurality of candidate sets of phase differences in the phase difference map: computing a first error between the first phase difference measurement and a first phase difference from the plurality of phase differences; computing a second error between the second phase difference measurement and a second phase difference from the plurality of phase differences, the second phase difference being separated from the first phase difference in the phase difference map by the angle offset; and computing a combined error by combining the first error and the second error; and identifying the compatible set of phase differences as having the combined error being the minimum value of the plurality of candidate sets of phase differences.

Example 14 is the non-transitory computer-readable medium of example(s) 9-13, wherein the operations further comprise: causing the angle of arrival of the interference signal to be displayed on a display of a user device.

Example 15 is a system comprising: one or more processors; and a computer-readable medium comprising instructions that, when executed by the one or more processors, cause the one or more processors to perform operations for localizing an interference signal relative to a global navigation satellite system (GNSS) receiver, the operations comprising: collecting, at a first time, a first phase difference measurement using a first antenna and a second antenna of the GNSS receiver and a first angle measurement using an inertial sensor of the GNSS receiver; collecting, at a second time after the first time and after the GNSS receiver has been at least partially moved or rotated, a second phase difference measurement using the first antenna and the second antenna and a second angle measurement using the inertial sensor; computing an angle offset between the first angle measurement and second angle measurement; searching a phase difference map using the first phase difference measurement, the second phase difference measurement, and the angle offset to identify a compatible set of phase differences in the phase difference map, the phase difference map including a plurality of phase differences indexed by vertical and/or horizontal angles, wherein the compatible set of phase differences are separated in the phase difference map by the angle offset; and estimating, based on the compatible set of phase differences, an angle of arrival of the interference signal relative to the GNSS receiver.

Example 16 is the system of example(s) 15, wherein the operations further comprise: storing the phase difference map at a memory of the GNSS receiver, the phase difference map having been obtained through a calibration process or through electromagnetic simulations.

Example 17 is the system of example(s) 15-16, further wherein estimating the angle of arrival of the interference signal based on the compatible set of phase differences includes determining the vertical and/or horizontal angles that index the compatible set of phase differences in the phase difference map.

Example 18 is the system of example(s) 15-17, wherein the angle of arrival of the interference signal includes one or both of a horizontal angle and a vertical angle, and wherein the angle offset includes one or both of a horizontal angle offset and a vertical angle offset.

Example 19 is the system of example(s) 15-18, wherein searching the phase difference map to identify the compatible set of phase differences includes: for each of a plurality of candidate sets of phase differences in the phase difference map: computing a first error between the first phase difference measurement and a first phase difference from the plurality of phase differences; computing a second error between the second phase difference measurement and a second phase difference from the plurality of phase differences, the second phase difference being separated from the first phase difference in the phase difference map by the angle offset; and computing a combined error by combining the first error and the second error; and identifying the compatible set of phase differences as having the combined error being the minimum value of the plurality of candidate sets of phase differences.

Example 20 is the system of example(s) 15-19, wherein the operations further comprise: causing the angle of arrival of the interference signal to be displayed on a display of a user device.

### BRIEF DESCRIPTION OF THE DRAWINGS

The accompanying drawings, which are included to provide a further understanding of the disclosure, are incorporated in and constitute a part of this specification, illustrate embodiments of the disclosure and together with the detailed description serve to explain the principles of the disclosure. No attempt is made to show structural details of the disclosure in more detail than may be necessary for a fundamental understanding of the disclosure and various ways in which it may be practiced.
FIGS. 1A and 1B illustrate an example block diagram and a perspective view of a dual-antenna GNSS receiver.
FIG. 2 illustrates example measurements that are collected as the angle of arrival of an interference signal changes within a 3D coordinate system of a dual-antenna GNSS receiver.
FIGS. 3A-3F illustrate an example phase difference map and a process of searching the map to identify a compatible set of phase differences.
FIGS. 4A-4E illustrate an example phase difference map and a process of searching the map to identify a compatible set of phase differences.
FIGS. 5A-5E illustrate an example phase difference map and a process of searching the map to identify a compatible set of phase differences.
FIG. 6 illustrates an example of a phase difference map.
FIG. 7 illustrates an example technique of displaying an angle of arrival on a display.
FIG. 8 illustrates an example of a rover (containing a dual-antenna GNSS receiver), a mobile base station, and a stationary base station operating within a GNSS.
FIG. 9 illustrates an example block diagram of a dual-antenna GNSS receiver.
FIG. 10 illustrates an example method of localizing an interference signal relative to a GNSS receiver.
FIG. 11 illustrates an example computer system comprising various hardware elements.

In the appended figures, similar components and/or features may have the same numerical reference label. Further, various components of the same type may be distinguished by following the reference label with a letter or by following the reference label with a dash followed by a second numerical reference label that distinguishes among the similar components and/or features. If only the first numerical reference label is used in the specification, the description is applicable to any one of the similar components and/or features having the same first numerical reference label, irrespective of the suffix.

### DETAILED DESCRIPTION OF THE INVENTION

Global Navigation Satellite System (GNSS) interference and jamming can disrupt the normal functioning of satellite navigation systems. GNSS interference can refer to any signal that disrupts the proper reception and processing of GNSS signals. Such interference can be intentional or unintentional. For example, unintentional interference can arise with certain electronic devices, such as mobile phones, radio transmitters, or other communication equipment that emit signals that interfere with GNSS. Intentional interference (i.e., jamming) is generally accomplished with devices specifically designed to emit radio frequency (RF) signals in the GNSS bands to overwhelm or block the legitimate GNSS signals. These are often small, portable, and relatively inexpensive.

GNSS interference is problematic for a number of reasons. It poses a safety risk for certain systems, including those in aviation, maritime, and emergency services, that rely on GNSS for navigation, timing, and collision avoidance. Disruptions in GNSS can also affect the logistics of transportation systems, leading to delays and increased costs in the transportation of goods. In financial markets, GNSS can provide precise timing needed for transaction timestamping. Thus, interference can lead to synchronization issues and financial losses. GNSS interference can also affect critical infrastructure, as many sectors such as energy and telecommunications rely on GNSS for timing and synchronization. Disruption of GNSS can lead to widespread service outages and vulnerabilities.

To mitigate GNSS interference, embodiments of the present disclosure provide for systems, methods, and other technique for determining the direction of arrival of an interference signal, also referred to as interference localization. Upon determining the direction from which the interference signal originates, authorities and technical teams can quickly locate the source, whether it is an unintentional emitter or an intentional jammer. Alternatively or additionally, with knowledge of the interference direction, the GNSS receiver can use signal processing techniques to reduce the effects of the interference. For example, the GNSS receiver can use beamforming of multiple antennas to form a directional signal pattern. By adjusting the phase and amplitude of the signal at each antenna element, the array can focus the signal in a particular direction while minimizing it in the direction of the interference.

Embodiments of the present disclosure provide for a dual-antenna GNSS receiver that localizes the source of interference using phase differences measured at the receiver's antennas and an angle offset measurement made using an inertial measurement unit (IMU) mounted to the receiver. The disclosed technique exploits the variation of the phase of the received signal as a function of direction of arrival when two antennas are placed close together. For antennas spaced further apart, the localization problem can be easier to solve. The phase response of a dual-antenna configuration varies for at least two reasons. First, the phase varies due to electromagnetic laws, which includes the mutual coupling between two antennas placed close together. Second, the phase varies due to the geometry of the two antennas. For example, a wavefront arriving from above will arrive at the two antenna elements at the same time, as will a wavefront arriving from broadside. However, a wavefront arriving from an axis going through the antennas will arrive at one antenna earlier than the other, and this causes the phase to be delayed proportional to the distance between the antennas.

The disclosed technique may include first determining the phase response of the GNSS antennas by performing a calibration process or electromagnetic simulations to obtain a phase difference map. The values from the phase difference map (referred to as phase differences) may be obtained by carefully rotating the GNSS receiver (or otherwise modifying the angle of arrival of the interference signal) by a calibration machine through all possible vertical and horizontal angles while phase measurements are collected. At each possible pair of vertical and horizontal angles of arrival, the phase of the received signal as captured by the first GNSS antenna is subtracted from the phase of the received signal as captured by the second GNSS antenna to obtain the phase difference. As a result of the calibration process, the phase difference map includes a plurality of phase difference values indexed by horizontal angle (or azimuth angle) and vertical angle (or elevation angle). The phase response may in some situations also be determined from electromagnetic simulations.

After calibration, the GNSS receiver may obtain phase difference measurements using the antennas and angle measurements using the IMU at two different times, a first time and a second time. Using the collected data, the phase difference map may be searched to identify a compatible set of phase differences that are spaced from each other by the angle offset between the angle measurement at the first time and the angle measurement at the second time. Compatibility may be measured by computing an error between the phase difference measurements and the calibrated phase difference values from the phase difference map. The compatible set of phase differences may be associated with the minimum computed error after errors for multiple candidate sets of phase differences are computed. The index values in the phase difference map that are associated with the compatible set of phase differences are obtained and are used to estimate the angle of arrival of the interference signal relative to the GNSS receiver.

Many advantages are achieved by way of the present disclosure. For example, embodiments of the present disclosure allow for interference localization in the case where the desired GNSS signals are completely drowned out by the interference signal. Furthermore, by identifying the unique direction of the interferer, the user can be guided towards it, improving localization even in multipath scenarios. If initial estimates fail to resolve the direction, additional phase difference and IMU data points may be collected to increase the accuracy of the estimated direction.

In the following description, various examples will be described. For purposes of explanation, specific configurations and details are set forth in order to provide a thorough understanding of the examples. However, it will also be apparent to one skilled in the art that the example may be practiced without the specific details. Furthermore, well-known features may be omitted or simplified in order not to obscure the embodiments being described.

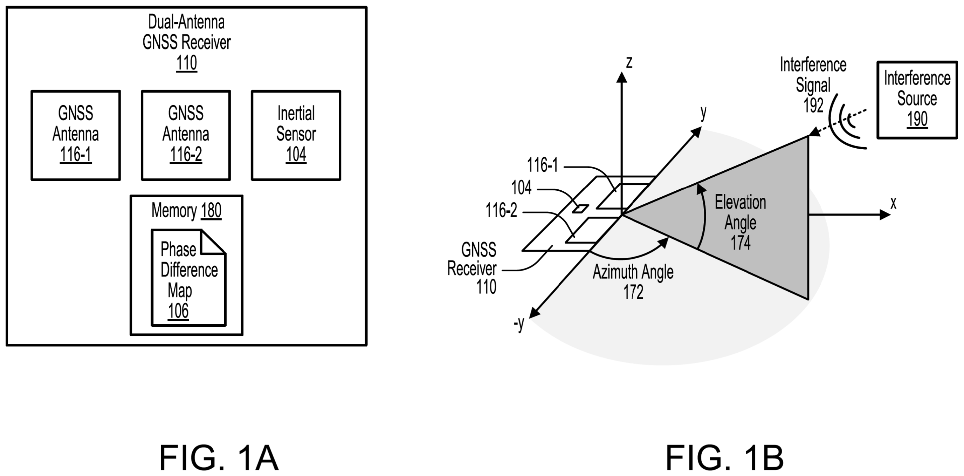

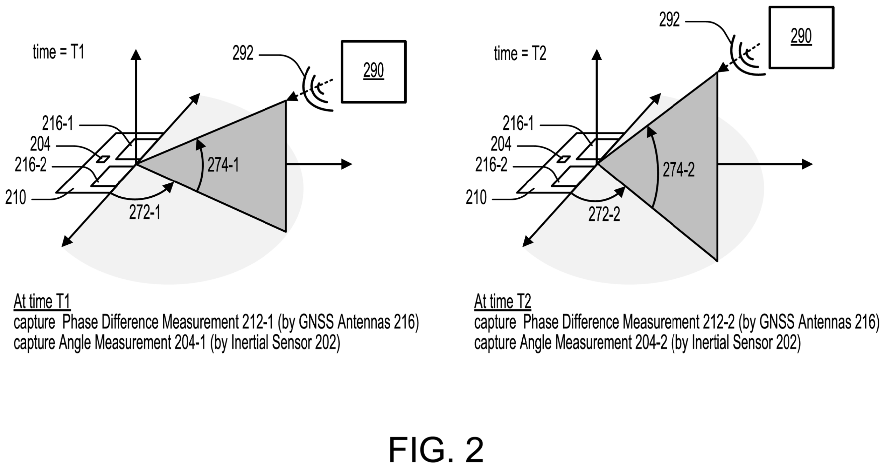

The figures herein follow a numbering convention in which the first digit or digits correspond to the figure number and the remaining digits identify an element or component in the figure. Similar elements or components between different figures may be identified by the use of similar digits. For example, 108 may reference element "08" in FIG. 1, and a similar element may be referenced as 208 in FIG. 2. As will be appreciated, elements shown in the various embodiments herein can be added, exchanged, and eliminated so as to provide a number of additional embodiments of the present disclosure. In addition, the proportion and the relative scale of the elements provided in the figures are intended to illustrate certain embodiments of the present disclosure and should not be taken in a limiting sense.

**FIGS. 1A** and **1B** illustrate an example block diagram and a perspective view of a dual-antenna GNSS receiver 110, respectively, according to some embodiments of the present disclosure. In FIG. 1A, dual-antenna GNSS receiver 110 includes a first GNSS antenna 116-1, a second GNSS antenna 116-2 that is proximally spaced with GNSS antenna 116-1, an inertial sensor 104 (e.g., an IMU, a gyroscope, etc.), and a memory 180 storing a phase difference map 106. GNSS antennas 116 may be used to receive one or more desired GNSS signals and/or an undesired interference signal 192. GNSS antennas 116 may be used independently to obtain separate position estimates for dual-antenna GNSS receiver 110 or may be used in combination to obtain a single position estimate, e.g., by using GNSS antennas 116 as a phased array to form a directional beam. Inertial sensor 104 may be used to capture angle measurements to determine an orientation or a change in orientation of dual-antenna GNSS receiver 110. Phase difference map 106 may be a two-dimensional (2D) array or matrix containing a plurality of phase difference values determined during a calibration process. The plurality of phase difference values may be indexed by vertical angles (e.g., elevation angle 174) and/or horizontal angles (e.g., azimuth angle 172) associated with an incoming RF signal. The phase difference map may also be parameterized.

In FIG. 1B, a perspective view of dual-antenna GNSS receiver 110 showing a three-dimensional (3D) right-hand coordinate system is illustrated. In the illustrated example, the 3D coordinate system includes a y-axis that passes through GNSS antennas 116 (e.g., in a first horizontal direction), a z-axis that extends upward and perpendicular to the y-axis (e.g., in a vertical direction), and an x-axis that extends in front of dual-antenna GNSS receiver 110 and perpendicular to both the y-axis and z-axis (e.g., in a second horizontal direction). Interference signal 192 arrives at dual-antenna GNSS receiver 110 at one or more angles relative to dual-antenna GNSS receiver 110 including an azimuth angle 172 and an elevation angle 174, where an elevation angle of 0° corresponds to the horizon and an elevation angle of 90° corresponds to the vertical direction. Other 3D coordinate systems may be utilized to characterize the angle of arrival of interference signal 192 and are considered to be within the scope of the present invention.

**FIG. 2** illustrates example measurements that are collected as the angle of arrival of an interference signal 292 changes within the 3D coordinate system of a dual-antenna GNSS receiver 210 between a first time T1 and a second time T2, according to some embodiments of the present disclosure. The change in the angle of arrival may be due to movement or rotation of dual-antenna GNSS receiver 210 and/or an interference source 290 that emits interference signal 292. At time T1, interference signal 292 is received by GNSS antennas 216 at an angle of arrival consisting of an azimuth angle 272-1 and an elevation angle 274-1. Based on the received signal, a first phase measurement is captured using GNSS antenna 216-1 and a second phase measurement is captured using GNSS antenna 216-2. The difference between the first and second phase measurements is recorded as a first phase difference measurement 212-1. Also at time T1, an inertial sensor 204 mounted to dual-antenna GNSS receiver 210 captures an angle measurement 202-1. In some examples, angle measurement 202-1 may consist of an orientation of dual-antenna GNSS receiver 210 within a world 3D reference frame at time T1.

Between times T1 and T2, the angle of arrival of interference signal 292 within the 3D coordinate system of dual-antenna GNSS receiver 210 (i.e., the angle of arrival of interference signal 292 with respect to dual-antenna GNSS receiver 210) changes due to movement or rotation of dual-antenna GNSS receiver 210 and/or interference source 290. In the illustrated example, the azimuth angle decreases and the elevation angle increases. At time T2, interference signal 292 is received by GNSS antennas 216 at an angle of arrival consisting of an azimuth angle 272-2 and an elevation angle 274-2. Similar to time T1, based on the received signal, a first phase measurement is captured using GNSS antenna 216-1 and a second phase measurement is captured using GNSS antenna 216-2. The difference between the first and second phase measurements is recorded as a second phase difference measurement 212-2. Also at time T2, inertial sensor 204 captures an angle measurement 202-2. In some examples, angle measurement 202-2 may consist of an orientation of dual-antenna GNSS receiver 210 within a world 3D reference frame at time T2.

As described herein, after data is collected at each of times T1 and T2, phase difference measurements 212 and angle measurements 202 can be used to estimate azimuth angle 272-2 and elevation angle 274-2 (and, alternatively or additionally, azimuth angle 272-1 and elevation angle 274-1). First, an angle offset between angle measurements 202 is computed. Next, a phase difference map is searched using phase difference measurements 212 to identify a compatible set of phase differences in the phase difference map that are separated in the phase difference map by the angle offset. The indices of the compatible set of phase differences are then used to estimate azimuth angle 272-2 and elevation angle 274-2. It is to be understood that additional phase difference measurements and angle measurements at additional times (e.g., times T3, T4, T5, etc.) can be used to produce additional estimates of the angle of arrival of interference signal 292 using similar computations. Such additional estimates may also be used to increase the accuracy of any of the estimates.

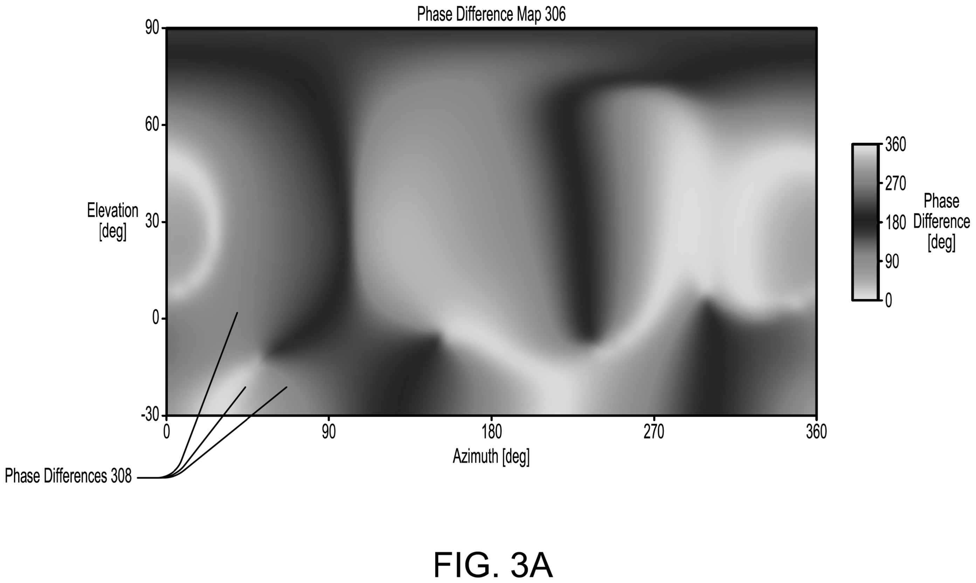

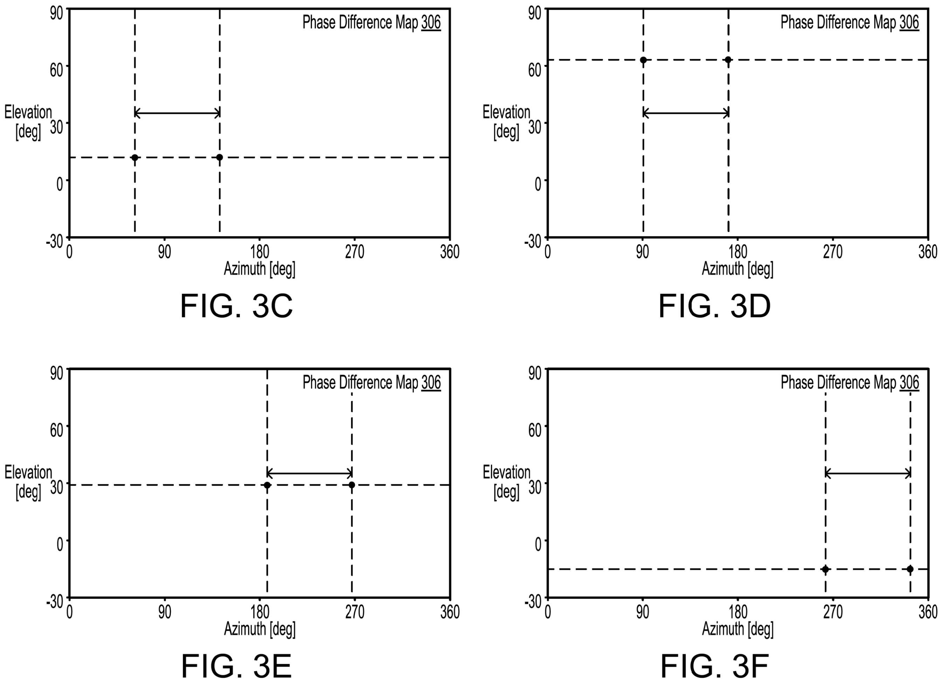

**FIGS. 3A-3F** illustrate an example phase difference map 306 and a process of searching the map to identify a compatible set of phase differences, according to some embodiments of the present disclosure. FIG. 3A illustrates phase difference map 306 with grayscale values indicating phase difference. Phase difference map 306 contains a plurality of phase differences 308 indexed by vertical angle (e.g., elevation angle) and horizontal angle (e.g., azimuth angle), using the 3D coordinate system of the GNSS receiver as described in reference to FIG. 2. Collectively, the vertical angle and the horizontal angle may be referred to as the angle of arrival of the received RF signal, whether it is a desired signal or an interference signal. Upon receiving the incoming RF signal by both antennas of the GNSS receiver, the difference between the measured phases of the received signals at the antennas can be expected to conform to phase differences 308 in accordance with the RF signal's angle of arrival.

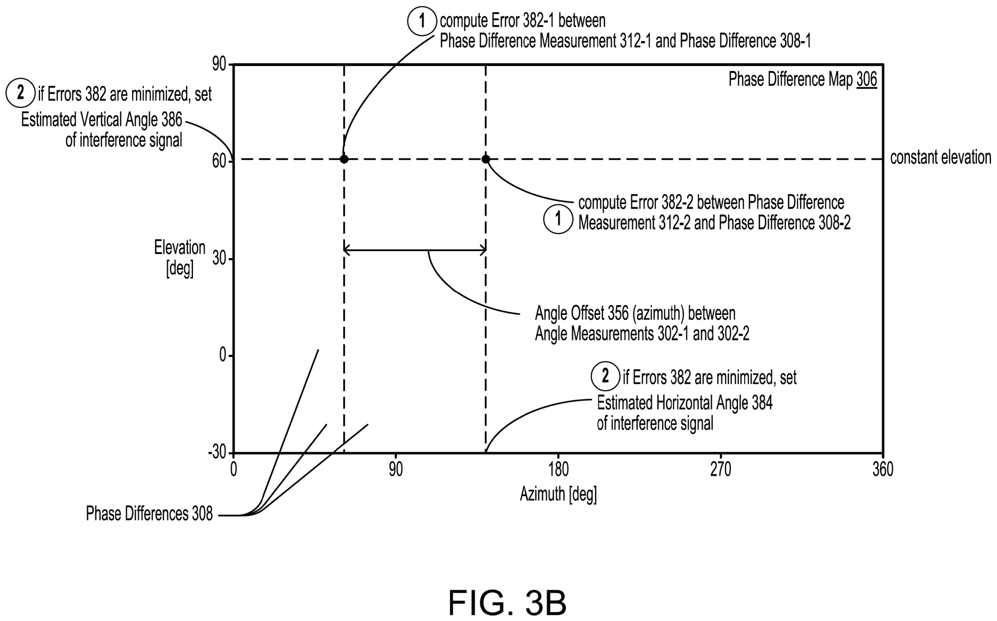

FIGS. 3B-3F illustrate an example search of phase difference map 306 to identify a compatible set of phase differences. The compatible set of phase differences may be two of phase differences 308 that are separated or spaced in phase difference map 306 by an angle offset 356 (being defined as the difference between angle measurements 302-1 and 302-2) and that have a sufficiently small error between the corresponding phase difference measurements 312-1 and 312-2. In the illustrated example, angle offset 356 consists of a horizontal angle offset only and the vertical angle of the incoming RF signal is determined to have not changed (i.e., the elevation angle is constant and the vertical angle offset is zero). During the search, different candidate pairs of phase differences 308 having the required separation in phase difference map 306 are selected and a combined error is computed for each candidate pair. As shown in reference to FIGS. 3C-3F, the search is performed while keeping the horizontal angle offset (or azimuth angle offset) and the vertical angle offset (or elevation angle offset) constant at a non-zero value and a zero value, respectively.

In some examples, for each candidate pair consisting of a first phase difference 308-1 and a second phase difference 308-2, a first error 382-1 may be computed between phase difference measurement 312-1 and first phase difference 308-1 from the candidate pair, and a second error 382-2 may be computed between phase difference measurement 312-2 and second phase difference 308-2 from the candidate pair. Error 382-1 may be computed as the magnitude of the difference between phase difference measurement 312-1 and phase difference 308-1, the square of the magnitude of the difference between phase difference measurement 312-1 and phase difference 308-1, or some other function for computing error. Similarly, error 382-2 may be computed as the magnitude of the difference between phase difference measurement 312-2 and phase difference 308-2, the square of the magnitude of the difference between phase difference measurement 312-2 and phase difference 308-2, or some other function for computing error. The combined error for the candidate pair may then be computed by summing, averaging, multiplying, or otherwise combining errors 382-1 and 382-2.

In some examples, a combined error may be computed for all possible candidate pairs of phase differences 308 before identifying the compatible set of phase differences to be used for estimating the angle of arrival. In other examples, a search algorithm may be employed so that a combined error is computed for only a subset of possible candidate pairs of phase differences 308 before identifying the compatible set of phase differences. The search algorithm may traverse phase difference map 306 so as to move in the direction of smaller combined errors. In either case, the compatible set of phase differences may be identified as the candidate pair having the minimum combined error. In some examples, the compatible set of phase differences may be an absolute minimum combined error or a relative minimum combined error.

Upon identifying the compatible set of phase differences, an estimate of the angle of arrival of the incoming RF signal (e.g., the interference signal) is obtained by determining the vertical and horizontal angles that index the compatible set of phase differences in phase difference map 306. Specifically, the one of the compatible set of phase differences that was compared to the more recent phase difference measurement (e.g., phase difference measurement 312-2) is selected, and its vertical and horizontal angles that index the phase difference are used for an estimated vertical angle 386 and an estimated horizontal angle 384, respectively. In the example illustrated in FIG. 3B, estimated vertical angle 386 is set to approximately 60° and estimated horizontal angle 384 is set to approximately 140°.

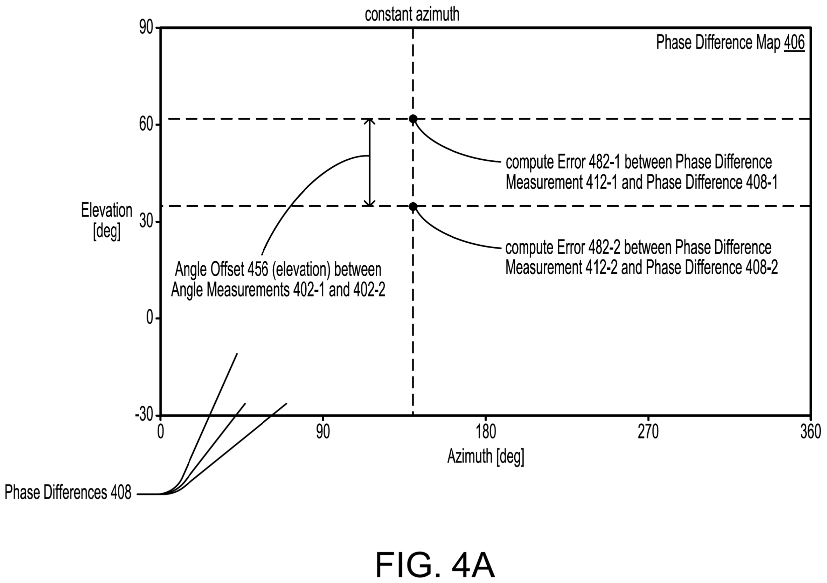

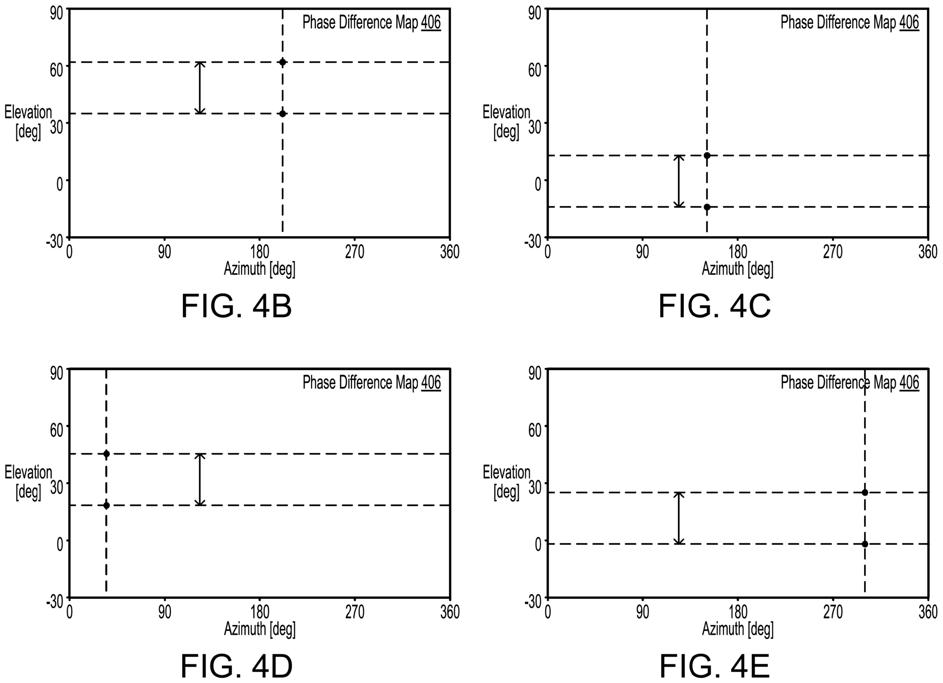

**FIGS. 4A-4E** illustrate an example phase difference map 406 and a process of searching the map to identify a compatible set of phase differences, according to some embodiments of the present disclosure. In FIG. 4A, phase difference map 406 contains a plurality of phase differences 408 indexed by vertical angle (e.g., elevation angle) and horizontal angle (e.g., azimuth angle), using the 3D coordinate system of the GNSS receiver as described in reference to FIG. 2. FIGS. 4B-4E illustrate example steps while searching phase difference map 406 to identify a compatible set of phase differences. The compatible set of phase differences may be two of phase differences 408 that are separated or spaced in phase difference map 406 by an angle offset 456 (being defined as the difference between angle measurements 402-1 and 402-2) and that have a sufficiently small error between the corresponding phase difference measurements 412-1 and 412-2.

In the illustrated example, angle offset 456 consists of a vertical angle offset only and the horizontal angle of the incoming RF signal is determined to have not changed (i.e., the horizontal angle offset is constant and the horizontal angle offset is zero). During the search, different candidate pairs of phase differences 408 having the required separation in phase difference map 406 are selected and a combined error is computed for each candidate pair. As shown in reference to FIGS. 4B-4E, the search is performed while keeping the horizontal angle offset and the vertical angle offset constant at a zero value and a non-zero value, respectively.

In some examples, for each candidate pair consisting of a first phase difference 408-1 and a second phase difference 408-2, a first error 482-1 may be computed between phase difference measurement 412-1 and phase difference 408-1 from the candidate pair, and a second error 482-2 may be computed between phase difference measurement 412-2 and phase difference 408-2 from the candidate pair. Error 482-1 (and similarly error 482-2) may be computed as the magnitude of the difference between phase difference measurement 412-1 and phase difference 408-1, the square of the magnitude of the difference between phase difference measurement 412-1 and phase difference 408-1, or some other function for computing error. The combined error for the candidate pair may then be computed by summing, averaging, multiplying, or otherwise combining errors 482-1 and 482-2.

In some examples, a combined error may be computed for all possible candidate pairs of phase differences 408 before identifying the compatible set of phase differences to be used for estimating the angle of arrival. In other examples, a search algorithm may be employed so that a combined error is computed for only a subset of possible candidate pairs of phase differences 408 before identifying the compatible set of phase differences. The search algorithm may traverse phase difference map 406 so as to move in the direction of smaller combined errors. In either case, the compatible set of phase differences may be identified as the candidate pair having the minimum combined error. In some examples, the compatible set of phase differences may be an absolute minimum combined error or a relative minimum combined error. Upon identifying the compatible set of phase differences, an estimate of the angle of arrival of the incoming RF signal (e.g., the interference signal) is obtained by determining the vertical and horizontal angles that index the compatible set of phase differences in phase difference map 406.

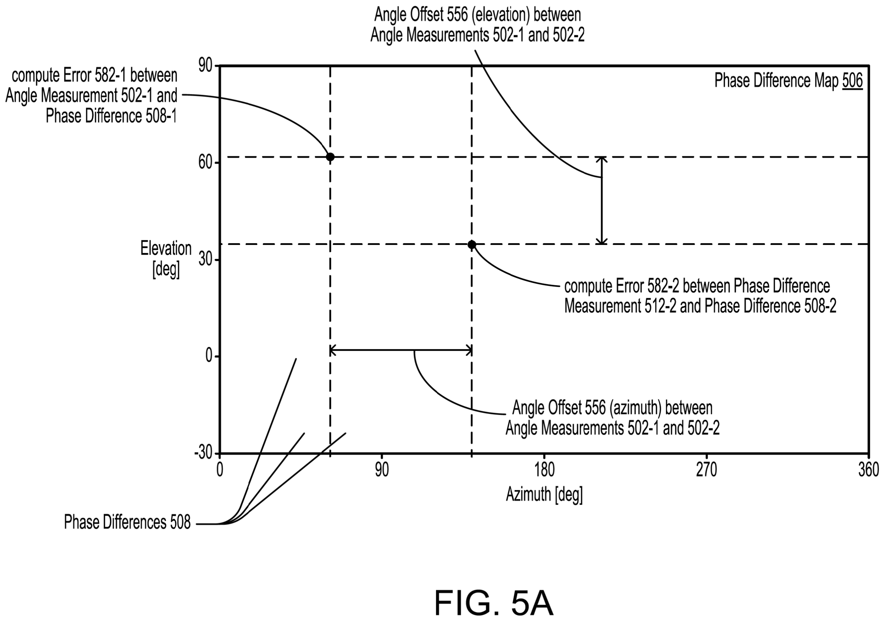

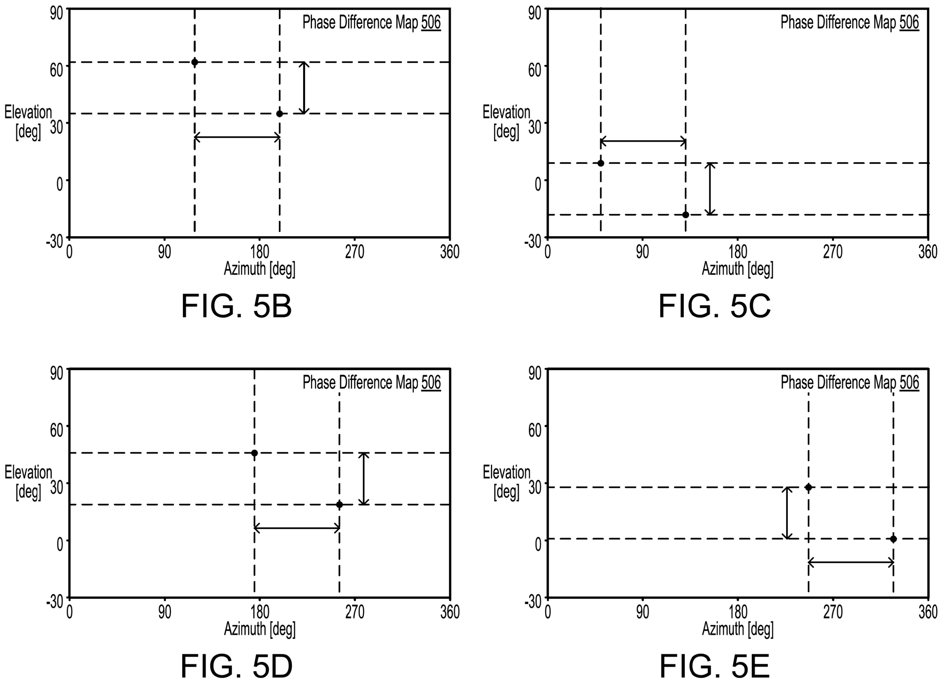

**FIGS. 5A-5E** illustrate an example phase difference map 506 and a process of searching the map to identify a compatible set of phase differences, according to some embodiments of the present disclosure. In FIG. 5A, phase difference map 506 contains a plurality of phase differences 508 indexed by vertical angle (e.g., elevation angle) and horizontal angle (e.g., azimuth angle), using the 3D coordinate system of the GNSS receiver as described in reference to FIG. 2. FIGS. 5B-5E illustrate example steps while searching phase difference map 506 to identify a compatible set of phase differences. The compatible set of phase differences may be two of phase differences 508 that are separated or spaced in phase difference map 506 by an angle offset 556 (being defined as the difference between angle measurements 502-1 and 502-2) and that have a sufficiently small error between the corresponding phase difference measurements 512-1 and 512-2.

In the illustrated example, angle offset 556 consists of both a horizontal angle offset and a vertical angle offset. During the search, different candidate pairs of phase differences 508 having the required separation in phase difference map 506 are selected and a combined error is computed for each candidate pair. As shown in reference to FIGS. 5B-5E, the search is performed while keeping the horizontal angle offset and the vertical angle offset constant at non-zero values. In some examples, for each candidate pair consisting of a first phase difference 508-1 and a second phase difference 508-2, a first error 582-1 may be computed between phase difference measurement 512-1 and phase difference 508-1 from the candidate pair, and a second error 582-2 may be computed between phase difference measurement 512-2 and phase difference 508-2 from the candidate pair. Error 582-1 (and similarly error 582-2) may be computed as the magnitude of the difference between phase difference measurement 512-1 and phase difference 508-1, the square of the magnitude of the difference between phase difference measurement 512-1 and phase difference 508-1, or some other function for computing error. The combined error for the candidate pair may then be computed by summing, averaging, multiplying, or otherwise combining errors 582-1 and 582-2.

In some examples, a combined error may be computed for all possible candidate pairs of phase differences 508 before identifying the compatible set of phase differences to be used for estimating the angle of arrival. In other examples, a search algorithm may be employed so that a combined error is computed for only a subset of possible candidate pairs of phase differences 508 before identifying the compatible set of phase differences. The search algorithm may traverse phase difference map 506 so as to move in the direction of smaller combined errors. In either case, the compatible set of phase differences may be identified as the candidate pair having the minimum combined error. In some examples, the compatible set of phase differences may be an absolute minimum combined error or a relative minimum combined error. Upon identifying the compatible set of phase differences, an estimate of the angle of arrival of the incoming RF signal (e.g., the interference signal) is obtained by determining the vertical and horizontal angles that index the compatible set of phase differences in phase difference map 506.

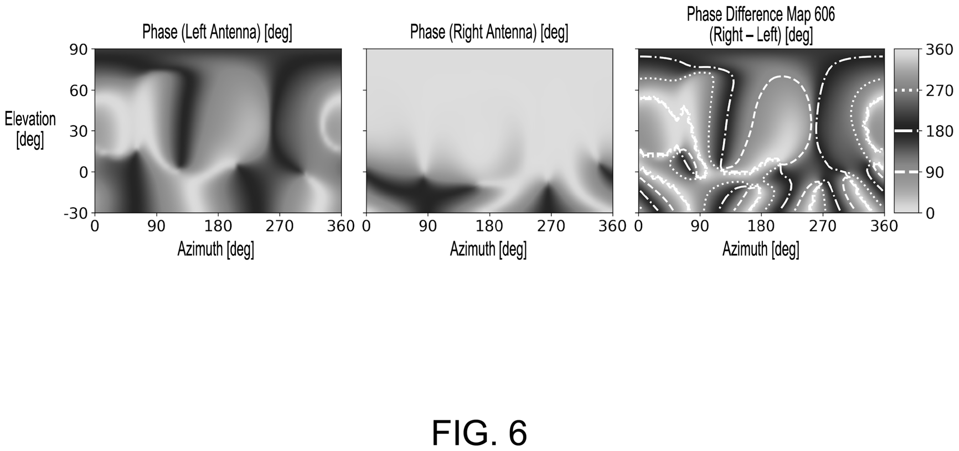

**FIG. 6** illustrates an example calibration process for obtaining a phase difference map 606, according to some embodiments of the present disclosure. In the left plot, phase measurements are made using the left GNSS antenna while the angle of arrival is swept through all possible vertical and horizontal angles. For example, the GNSS receiver may be rotated by a calibration machine through all possible vertical and horizontal angles while phase measurements are collected. Concurrently, in the center plot, phase measurements are made using the right GNSS antenna while the angle of arrival is swept through all possible vertical and horizontal angles. In the right plot, phase difference map 606 is generated by subtracting the phase measurements made using the left GNSS antenna from the phase measurements made using the right GNSS antenna. A similar map can also be obtained through electromagnetic simulations.

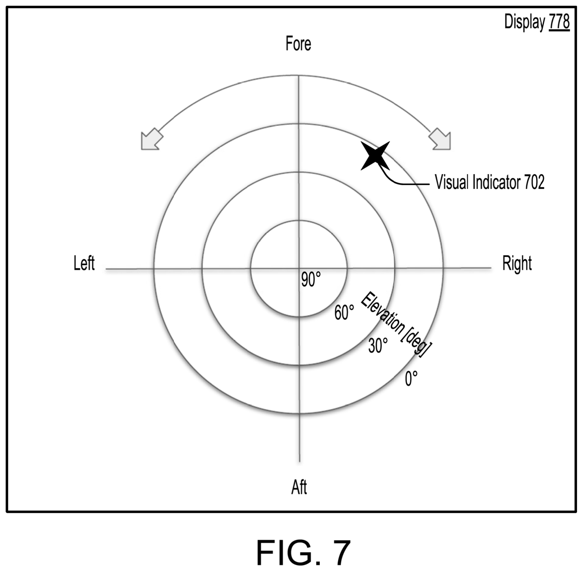

**FIG. 7** illustrates an example technique of displaying the angle of arrival on a display 778, according to some embodiments of the present disclosure. In some examples, a user device may include display 778 on which a visual indicator 702 may be displayed to indicate the direction of arrival of the interference signal. The user device may be integrated with the GNSS receiver or may be a separate device (e.g., a smart phone) in communication with the GNSS receiver. Visual indicator 702 may be overlaid onto a grid with lines that indicate horizontal and/or vertical angles. A user operating the user device may view display 778 and walk in the direction indicated by visual indicator 702 until arriving at the interference source. In some instances, display 778 may further display instructions for the user to follow. For example, an instruction may be displayed for the user to at least partially rotate or move the GNSS receiver between times T1 and T2 so that the interference signal can be localized.

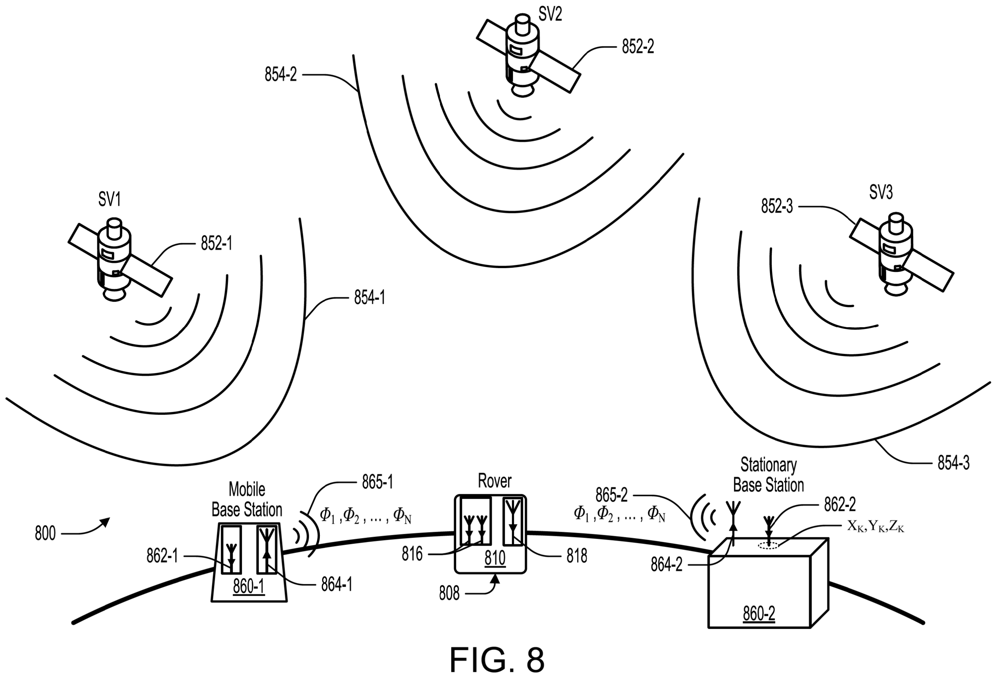

**FIG. 8** illustrates an example of a rover 808 (containing a dual-antenna GNSS receiver 810), a mobile base station 860-1, and a stationary base station 860-2 operating within a GNSS 800, according to some embodiments of the present disclosure. GNSS 800 includes one or more GNSS satellites 852, i.e., space vehicles (SV), in orbit above rover 808 and base stations 860. GNSS satellites 852 may continuously, periodically, or intermittently broadcast wireless signals 854 containing PRN codes modulated onto carrier frequencies (e.g., L1 and/or L2 carrier frequencies). Wireless signals 854 may include satellite position data, referred to as "ephemeris data", which indicates the satellite's current position and optionally the satellite's velocity. Furthermore, wireless signals 854 of different GNSS satellites 852 may include different PRN codes that identify each particular GNSS satellite such that receivers may associate different received signals to different GNSS satellites 852.

For example, GNSS satellite 852-1 may broadcast wireless signals 854-1 which contain a different PRN code and different ephemeris data than those contained in wireless signals 854-2 broadcasted by GNSS satellite 852-2. Similarly, GNSS satellite 852-3 may broadcast wireless signals 854-3 which contain a different PRN code and different ephemeris data than those contained in wireless signals 854-1 and 854-2 broadcasted by GNSS satellites 852-1 and 852-2, respectively. One or more of wireless signals 854 may be received by each of GNSS antennas 816 of dual-antenna GNSS receiver 810. GNSS antennas 816 may be patch antennas, turnstile antennas, helical antennas, parabolic antennas, phased-array antennas, resistive plane antennas, choke ring antennas, radome antennas, among other possibilities.

Each of GNSS satellites 852 may belong to one or more of a variety of system types, such as Global Positioning System (GPS), Satellite-based Augmentation System (SBAS), Galileo, Global Navigation Satellite System (GLONASS), and BeiDou, and may transmit wireless signals having one or more of a variety of signal types (e.g., GPS L1 C/A, GPS L2C, Galileo E1, Galileo E5A, etc.). For example, GNSS satellite 852-1 may be a GPS satellite and may transmit wireless signals having a GPS L1 C/A signal type (i.e., wireless signals having frequencies within the GPS L1 band and having been modulated using C/A code). GNSS satellite 852-1 may additionally or alternatively transmit wireless signals having a GPS L2C signal type (i.e., wireless signals having frequencies within the GPS L2 band and having been modulated using L2 civil codes). In some embodiments, GNSS satellite 852-1 may additionally be a Galileo satellite and may transmit wireless signals having a Galileo signal type (e.g., Galileo E1). Accordingly, a single satellite may include the ability to transmit wireless signals of a variety of signal types.

Dual-antenna GNSS receiver 810 may use the pseudoranges between itself and GNSS satellites 852-1, 852-2, and 852-3 to generate a position estimate through trilateration. For example, multiple spheres may be generated having center locations corresponding to the locations of GNSS satellites 852 and radii corresponding to the pseudoranges, with the intersection point(s) of the spheres used to determine the position estimate for dual-antenna GNSS receiver 810. The position estimate may be continuously, periodically, or intermittently updated by generating new pseudoranges and performing trilateration using the new pseudoranges. Subsequent position estimates may benefit from previous position estimates through filtering processes (e.g., Kalman filtering) capable of improving position estimate accuracy. Position estimates may also be determined using other techniques. In practice, a fourth satellite may be observed to estimate the receiver clock error with respect to the satellite system time.

Mobile base station 860-1 and stationary base station 860-2 may include GNSS antennas 862-1 and 862-2, respectively, where GNSS antenna 862-2 is positioned at a known position (e.g., X_{K},Y_{K},Z_{K}). Mobile base station 860-1 may be movable such that multiple mobile base stations 860-1 may be brought within or surrounding a project site so as to provide high-accuracy position estimates. Each of GNSS antennas 862 may be similar to GNSS antennas 816 and may be configured to receive one or more of wireless signals 854. For example, each of GNSS antennas 862 may be a patch antenna, a turnstile antenna, a helical antenna, a parabolic antenna, a phased-array antenna, a resistive plane antenna, a choke ring antenna, a radome antenna, among other possibilities.

Each of base stations 860 may send a correction signal 865 containing correction data to dual-antenna GNSS receiver 810. The correction data is used by dual-antenna GNSS receiver 810 to improve the accuracy of its position estimate. In some embodiments, the correction data includes a 3D offset amount (e.g., Xc,Yc,Zc) for modifying the position estimate of dual-antenna GNSS receiver 810. In one example, position estimates of stationary base station 860-2 made using GNSS antenna 862-2 are compared to the known position and the correction data may be generated based on the comparison. In some embodiments, the correction data includes any one of various types of raw or processed satellite data.

Correction signals 865 containing the correction data may be wirelessly transmitted by base stations 860 using correction antennas 864 and may be received by dual-antenna GNSS receiver 810 using a correction antenna 818. The correction signals 865 may be transmitted continuously, periodically, or intermittently by base stations 860. In some embodiments, correction signals 865 are transmitted over a set of wireless frequencies outside the GNSS frequencies (e.g., lower than the GNSS frequencies). In some embodiments, correction antennas 864 may be used for transmission only and correction antenna 818 may be used for reception only, although in some embodiments additional handshaking between dual-antenna GNSS receiver 810 and base stations 860 may occur.

In some examples, dual-antenna GNSS receiver 810 may use RTK techniques to estimate its position with centimeter-level accuracy by making carrier phase measurements of the received wireless signals 854. These carrier phase measurements, which may be referred to as "rover carrier phase measurements" or "rover RTK measurements", may be analyzed along with carrier phase measurements at one or both of base stations 860, which may be referred to as "reference carrier phase measurements" or "reference RTK measurements", to determine a vector (rover-to-base vector) between the position of rover 808 and the position(s) of base station(s) 860. This rover-to-base vector may be combined with the known positions of base stations 860 to estimate the position of rover 808. When using RTK techniques, the correction data may contain the reference carrier phase measurements, which may include a plurality of carrier phases *Φ*₁ ,*Φ*₂ , ... , *Φ*_{N}, where N is the number of GNSS satellites. In some examples, the correction data may further include the known position (e.g., X_{K},Y_{K},Z_{K}) of base station 860-2. Though the description of FIG. 8 provides an example of using external information (such as a received GNSS signal), external information is not used in some embodiments. In some configurations, correction data is not used.

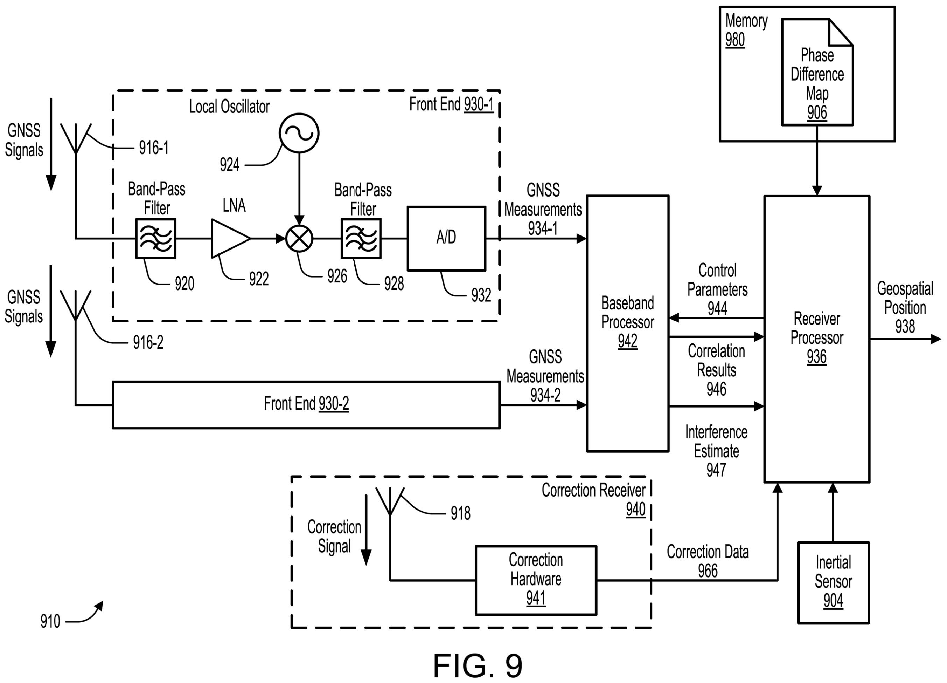

**FIG. 9** illustrates an example block diagram of a dual-antenna GNSS receiver 910, according to some embodiments of the present disclosure. Dual-antenna GNSS receiver 910 includes antennas 916 for receiving wireless signals and sending/routing wireless signals to radio frequency (RF) front ends 930. RF front ends are well known in the art, and in some instances include a band-pass filter 920 for initially filtering out undesirable frequency components outside the frequencies of interest, a low-noise amplifier (LNA) 922 for amplifying the received signal, a local oscillator 924 and a mixer 926 for down converting the received signal from RF to intermediate frequencies (IF), a band-pass filter 928 for removing frequency components outside IF, and an analog-to-digital (A/D) converter 932 for sampling the received signal to generate GNSS measurements 934 (e.g., digital samples). In some configurations, an interference estimate 947 is input to the receiver processor 936. For example, a filtered estimate of a covariance matrix can be transmitted.

In some instances, RF front ends 930 include additional or fewer components than that shown in FIG. 9. For example, RF front ends 930 may include a second local oscillator and/or a phase-locked loop (90 degrees out of phase with respect to the first), a second mixer, a second band-pass filter, and/or a second A/D converter for generating digital samples corresponding to the quadrature component of the received wireless signals. Digital samples corresponding to the in-phase component of the received wireless signals and digital samples corresponding to the quadrature component of the received wireless signals may both be sent to a baseband processor 942. In some embodiments, digital samples corresponding to both in-phase and quadrature components may be included in GNSS measurements 934.

Other components within RF front ends 930 may include a phase-locked loop (PLL) for synchronizing the phase of local oscillator 924 with the phase of the received signal, and a phase shifter for generating a second mixing signal using local oscillator 924 that is 90 degrees out of phase with local oscillator 924. In some configurations, one or more front ends 930 share a local oscillator 924, mixer 926, band-pass filter 928, and/or A/D converter 932 to pass into the baseband processor 942. In some embodiments, RF front ends 930 do not include band-pass filter 920 and LNA 922. In some embodiments, A/D converter 932 is coupled directly to antenna 916 and samples the RF signal directly without down-conversion to IF. In some embodiments, RF front ends 930 only include band-pass filter 920 and A/D converter 932. Other possible configurations of RF front ends 930 are possible.

GNSS measurements 934 generated by RF front ends 930 may be sent to a baseband processor 942, which may perform one or more correlations on GNSS measurements 934 using local codes. Operation of baseband processor 942 may be controlled by control parameters 944 generated by a receiver processor 936. Baseband processor 942 may generate correlation results 946 based on GNSS measurements 934 and control parameters 944 and send these results to receiver processor 936. In some embodiments, one or more operations performed by baseband processor 942 may alternatively be performed by receiver processor 936. In some embodiments, baseband processor 942 is a specific piece of hardware, such as an application-specific integrated circuit (ASIC) or a field-programmable gate array (FPGA). In some embodiments, operations performed by baseband processor 942 are performed entirely in software using digital signal processing (DSP) techniques.

To assist in the positioning algorithm, receiver processor 936 may receive correction data 966 generated by a correction receiver 940 having correction hardware 941. Based on these inputs, receiver processor 936 may generate and output a plurality of GNSS points including a geospatial position 938. Each of the plurality of GNSS points may be a 3D coordinate represented by three numbers. In some embodiments, the three numbers may correspond to latitude, longitude, and elevation/altitude. In other embodiments, the three numbers may correspond to X, Y, and Z positions. Geospatial position 938 may be outputted to be displayed to a user, transmitted to a separate device (e.g., computer, smartphone, server, etc.) via a wired or wireless connection, or further processed, among other possibilities. In some configurations, the correction receiver 940 and/or correction data 966 is not used.

To perform interference localization, a phase difference map 906 (and phase difference values contained therein) may be retrieved from a memory 980. Furthermore, dual-antenna GNSS receiver 910 may include an inertial sensor 904 that may capture an angle measurement. Receiver processor 936 may receive the angle measurement from inertial sensor 904 and phase difference map 906 from memory 980, and use this data along with phase measurements derived from the GNSS signals received by antennas 916 to estimate the angle of arrival of an interference signal as described herein.

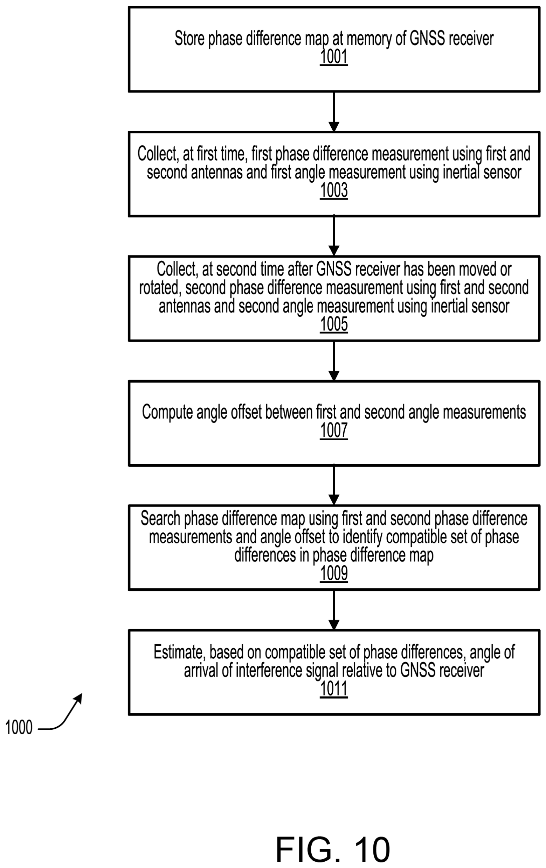

**FIG. 10** illustrates an example method 1000 of localizing an interference signal relative to a GNSS receiver, according to some embodiments of the present disclosure. Steps of method 1000 may be performed in any order and/or in parallel, and one or more steps of method 1000 may be optionally performed. One or more steps of method 1000 may be performed by one or more processors, such as those included in a GNSS receiver. Method 1000 may be implemented as a computer-readable medium or computer program product comprising instructions which, when the program is executed by one or more processors, cause the one or more processors to carry out the steps of method 1000.

At step 1001, a phase difference map (e.g., phase difference maps 106, 306, 406, 506, 606, 906) is stored at a memory (e.g., memory 980) of a GNSS receiver (e.g., dual-antenna GNSS receivers 110, 210, 810, 910). The phase difference map may include a plurality of phase differences (e.g., phase differences 308, 408, 508) indexed by vertical and/or horizontal angles or a parameterized function of horizontal and vertical angles. The phase difference map may be generated during a calibration process during which the GNSS receiver (or a separate GNSS receiver having similar dimensions to the GNSS receiver) is rotated by a calibration machine through a set of vertical and horizontal angles while phase measurements are collected, or derived through electromagnetic simulations.

At step 1003, a first phase difference measurement (e.g., phase difference measurements 212-1, 312-1, 412-1, 512-1) is collected using a first antenna (e.g., GNSS antennas 116-1, 216-1, 816, 916-1) and a second antenna (e.g., GNSS antennas 116-2, 216-2, 816, 916-2) of the GNSS receiver and a first angle measurement (e.g., angle measurements 202-1, 302-1, 402-1, 502-1) is collected using an inertial sensor (e.g., inertial sensors 104, 204, 904) of the GNSS receiver at a first time. The first phase difference measurement may be collected based on an interference signal (e.g., interference signals 192, 292) that is received at the GNSS receiver from an interference source (e.g., interference sources 190, 290). The first antenna may be proximally spaced with the second antenna such that the antennas exhibit cross-antenna interference. The first antenna and the second antenna may be mounted to an antenna platform of the GNSS receiver. The inertial sensor may be an IMU mounted to the GNSS receiver (e.g., to the antenna platform).

At step 1005, after the first time and after the GNSS receiver has been at least partially moved or rotated, a second phase difference measurement (e.g., phase difference measurements 212-2, 312-2, 412-2, 512-2) is collected using the first antenna and the second antenna and a second angle measurement (e.g., angle measurements 202-2, 302-2, 402-2, 502-2) is collected using the inertial sensor at a second time. The second phase difference measurement may be collected based on the interference signal that is received at the GNSS receiver from the interference source.

At step 1007, an angle offset (e.g., angle offsets 356, 456, 556) between the first angle measurement and second angle measurement is computed. The angle offset includes one or both of a horizontal angle offset (e.g., azimuth angle offset) and a vertical angle offset (e.g., elevation angle offset).

At step 1009, the phase difference map is searched using the first phase difference measurement, the second phase difference measurement, and the angle offset to identify a compatible set of phase differences in the phase difference map. The compatible set of phase differences may include a first phase difference (e.g., phase differences 308-1, 408-1, 508-1) and a second phase difference (e.g., phase differences 308-2, 408-2, 508-2). The compatible set of phase differences may be separated in the phase difference map by the angle offset.

At step 1011, an angle of arrival of the interference signal relative to the GNSS receiver is estimated based on the compatible set of phase differences. The estimated angle of arrival may include an estimated horizonal angle (e.g., estimated horizontal angle 384) and/or an estimated vertical angle (e.g., estimated vertical angle 386). Estimating the angle of arrival of the interference signal may include determining the vertical and/or horizontal angles that index the compatible set of phase differences in the phase difference map.

In some examples, method 1000 may further include using signal processing to reduce the effects of the interference signal based on knowledge of the angle of arrival. In some examples, method 1000 may further include causing the angle of arrival of the interference signal to be displayed on a display (e.g., display 778) of a user device. The user device may be integrated with the GNSS receiver or may be a separate device in communication with the GNSS receiver. A visual indicator (e.g., visual indicator 702) may be displayed on the display to indicate the angle of arrival of the interference signal. A user operating the user device may view the visual indicator on the display and walk in the direction indicated by the visual indicator to find and disable the interference source.

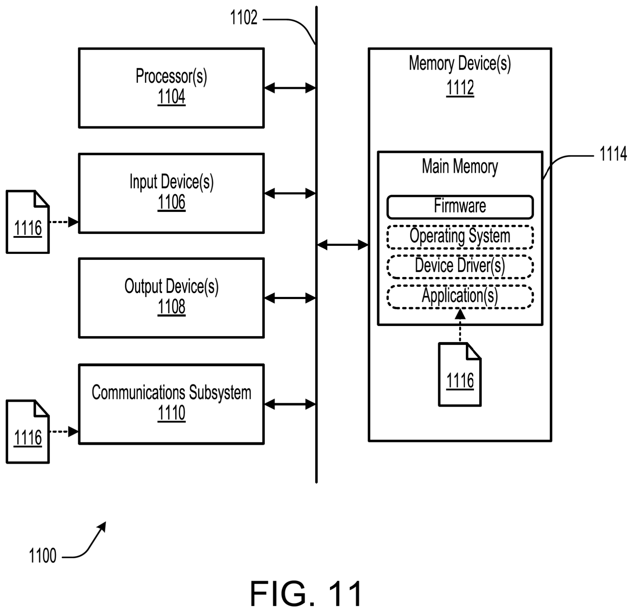

**FIG. 11** illustrates an example computer system 1100 comprising various hardware elements, in accordance with some embodiments of the present disclosure. Computer system 1100 may be incorporated into or integrated with devices described herein and/or may be configured to perform some or all of the steps of the methods provided by various embodiments. It should be noted that FIG. 11 is meant only to provide a generalized illustration of various components, any or all of which may be utilized as appropriate. FIG. 11, therefore, broadly illustrates how individual system elements may be implemented in a relatively separated or relatively more integrated manner.

In the illustrated example, computer system 1100 includes a communication medium 1102, one or more processor(s) 1104, one or more input device(s) 1106, one or more output device(s) 1108, a communications subsystem 1110, and one or more memory device(s) 1112. Computer system 1100 may be implemented using various hardware implementations and embedded system technologies. For example, one or more elements of computer system 1100 may be implemented within an integrated circuit (IC), an application-specific integrated circuit (ASIC), an application-specific standard product (ASSP), a field-programmable gate array (FPGA), such as those commercially available by XILINX^{®}, INTEL^{®}, or LATTICE SEMICONDUCTOR^{®}, a system-on-a-chip (SoC), a microcontroller, a printed circuit board (PCB), and/or a hybrid device, such as an SoC FPGA, among other possibilities.

The various hardware elements of computer system 1100 may be communicatively coupled via communication medium 1102. While communication medium 1102 is illustrated as a single connection for purposes of clarity, it should be understood that communication medium 1102 may include various numbers and types of communication media for transferring data between hardware elements. For example, communication medium 1102 may include one or more wires (e.g., conductive traces, paths, or leads on a PCB or integrated circuit (IC), microstrips, striplines, coaxial cables), one or more optical waveguides (e.g., optical fibers, strip waveguides), and/or one or more wireless connections or links (e.g., infrared wireless communication, radio communication, microwave wireless communication), among other possibilities.

In some embodiments, communication medium 1102 may include one or more buses that connect the pins of the hardware elements of computer system 1100. For example, communication medium 1102 may include a bus that connects processor(s) 1104 with main memory 1114, referred to as a system bus, and a bus that connects main memory 1114 with input device(s) 1106 or output device(s) 1108, referred to as an expansion bus. The system bus may itself consist of several buses, including an address bus, a data bus, and a control bus. The address bus may carry a memory address from processor(s) 1104 to the address bus circuitry associated with main memory 1114 in order for the data bus to access and carry the data contained at the memory address back to processor(s) 1104. The control bus may carry commands from processor(s) 1104 and return status signals from main memory 1114. Each bus may include multiple wires for carrying multiple bits of information and each bus may support serial or parallel transmission of data.

Processor(s) 1104 may include one or more central processing units (CPUs), graphics processing units (GPUs), neural network processors or accelerators, digital signal processors (DSPs), and/or other general-purpose or special-purpose processors capable of executing instructions. A CPU may take the form of a microprocessor, which may be fabricated on a single IC chip of metal-oxide-semiconductor field-effect transistor (MOSFET) construction. Processor(s) 1104 may include one or more multi-core processors, in which each core may read and execute program instructions concurrently with the other cores, increasing speed for programs that support multithreading.

Input device(s) 1106 may include one or more of various user input devices such as a mouse, a keyboard, a microphone, as well as various sensor input devices, such as an image capture device, a temperature sensor (e.g., thermometer, thermocouple, thermistor), a pressure sensor (e.g., barometer, tactile sensor), a movement sensor (e.g., accelerometer, gyroscope, tilt sensor), a light sensor (e.g., photodiode, photodetector, charge-coupled device), and/or the like. Input device(s) 1106 may also include devices for reading and/or receiving removable storage devices or other removable media. Such removable media may include optical discs (e.g., Blu-ray discs, DVDs, CDs), memory cards (e.g., CompactFlash card, Secure Digital (SD) card, Memory Stick), floppy disks, Universal Serial Bus (USB) flash drives, external hard disk drives (HDDs) or solid-state drives (SSDs), and/or the like.

Output device(s) 1108 may include one or more of various devices that convert information into human-readable form, such as without limitation a display device, a speaker, a printer, a haptic or tactile device, and/or the like. Output device(s) 1108 may also include devices for writing to removable storage devices or other removable media, such as those described in reference to input device(s) 1106. Output device(s) 1108 may also include various actuators for causing physical movement of one or more components. Such actuators may be hydraulic, pneumatic, electric, and may be controlled using control signals generated by computer system 1100.

Communications subsystem 1110 may include hardware components for connecting computer system 1100 to systems or devices that are located external to computer system 1100, such as over a computer network. In various embodiments, communications subsystem 1110 may include a wired communication device coupled to one or more input/output ports (e.g., a universal asynchronous receiver-transmitter (UART)), an optical communication device (e.g., an optical modem), an infrared communication device, a radio communication device (e.g., a wireless network interface controller, a BLUETOOTH^{®} device, an IEEE 802.11 device, a Wi-Fi device, a Wi-Max device, a cellular device), among other possibilities.

Memory device(s) 1112 may include the various data storage devices of computer system 1100. For example, memory device(s) 1112 may include various types of computer memory with various response times and capacities, from faster response times and lower capacity memory, such as processor registers and caches (e.g., L0, L1, L2), to medium response time and medium capacity memory, such as random-access memory (RAM), to lower response times and lower capacity memory, such as solid-state drives and hard drive disks. While processor(s) 1104 and memory device(s) 1112 are illustrated as being separate elements, it should be understood that processor(s) 1104 may include varying levels of on-processor memory, such as processor registers and caches that may be utilized by a single processor or shared between multiple processors.

Memory device(s) 1112 may include main memory 1114, which may be directly accessible by processor(s) 1104 via the address and data buses of communication medium 1102. For example, processor(s) 1104 may continuously read and execute instructions stored in main memory 1114. As such, various software elements may be loaded into main memory 1114 to be read and executed by processor(s) 1104 as illustrated in FIG. 11. Typically, main memory 1114 is volatile memory, which loses all data when power is turned off and accordingly needs power to preserve stored data. Main memory 1114 may further include a small portion of non-volatile memory containing software (e.g., firmware, such as BIOS) that is used for reading other software stored in memory device(s) 1112 into main memory 1114. In some embodiments, the volatile memory of main memory 1114 is implemented as RAM, such as dynamic random-access memory (DRAM), and the non-volatile memory of main memory 1114 is implemented as read-only memory (ROM), such as flash memory, erasable programmable read-only memory (EPROM), or electrically erasable programmable read-only memory (EEPROM).

Computer system 1100 may include software elements, shown as being currently located within main memory 1114, which may include an operating system, device driver(s), firmware, compilers, and/or other code, such as one or more application programs, which may include computer programs provided by various embodiments of the present disclosure. Merely by way of example, one or more steps described with respect to any methods discussed above, may be implemented as instructions 1116, which are executable by computer system 1100. In one example, such instructions 1116 may be received by computer system 1100 using communications subsystem 1110 (e.g., via a wireless or wired signal that carries instructions 1116), carried by communication medium 1102 to memory device(s) 1112, stored within memory device(s) 1112, read into main memory 1114, and executed by processor(s) 1104 to perform one or more steps of the described methods. In another example, instructions 1116 may be received by computer system 1100 using input device(s) 1106 (e.g., via a reader for removable media), carried by communication medium 1102 to memory device(s) 1112, stored within memory device(s) 1112, read into main memory 1114, and executed by processor(s) 1104 to perform one or more steps of the described methods.

In some embodiments of the present disclosure, instructions 1116 are stored on a computer-readable storage medium (or simply computer-readable medium). Such a computer-readable medium may be non-transitory and may therefore be referred to as a non-transitory computer-readable medium. In some cases, the non-transitory computer-readable medium may be incorporated within computer system 1100. For example, the non-transitory computer-readable medium may be one of memory device(s) 1112 (as shown in FIG. 11). In some cases, the non-transitory computer-readable medium may be separate from computer system 1100. In one example, the non-transitory computer-readable medium may be a removable medium provided to input device(s) 1106 (as shown in FIG. 11), such as those described in reference to input device(s) 1106, with instructions 1116 being read into computer system 1100 by input device(s) 1106. In another example, the non-transitory computer-readable medium may be a component of a remote electronic device, such as a mobile phone, that may wirelessly transmit a data signal that carries instructions 1116 to computer system 1100 and that is received by communications subsystem 1110 (as shown in FIG. 11).

Instructions 1116 may take any suitable form to be read and/or executed by computer system 1100. For example, instructions 1116 may be source code (written in a human-readable programming language such as Java, C, C++, C#, Python), object code, assembly language, machine code, microcode, executable code, and/or the like. In one example, instructions 1116 are provided to computer system 1100 in the form of source code, and a compiler is used to translate instructions 1116 from source code to machine code, which may then be read into main memory 1114 for execution by processor(s) 1104. As another example, instructions 1116 are provided to computer system 1100 in the form of an executable file with machine code that may immediately be read into main memory 1114 for execution by processor(s) 1104. In various examples, instructions 1116 may be provided to computer system 1100 in encrypted or unencrypted form, compressed or uncompressed form, as an installation package or an initialization for a broader software deployment, among other possibilities.

In one aspect of the present disclosure, a system (e.g., computer system 1100) is provided to perform methods in accordance with various embodiments of the present disclosure. For example, some embodiments may include a system comprising one or more processors (e.g., processor(s) 1104) that are communicatively coupled to a non-transitory computer-readable medium (e.g., memory device(s) 1112 or main memory 1114). The non-transitory computer-readable medium may have instructions (e.g., instructions 1116) stored therein that, when executed by the one or more processors, cause the one or more processors to perform the methods described in the various embodiments.

In another aspect of the present disclosure, a computer-program product that includes instructions (e.g., instructions 1116) is provided to perform methods in accordance with various embodiments of the present disclosure. The computer-program product may be tangibly embodied in a non-transitory computer-readable medium (e.g., memory device(s) 1112 or main memory 1114). The instructions may be configured to cause one or more processors (e.g., processor(s) 1104) to perform the methods described in the various embodiments.

In another aspect of the present disclosure, a non-transitory computer-readable medium (e.g., memory device(s) 1112 or main memory 1114) is provided. The non-transitory computer-readable medium may have instructions (e.g., instructions 1116) stored therein that, when executed by one or more processors (e.g., processor(s) 1104), cause the one or more processors to perform the methods described in the various embodiments.

The methods, systems, and devices discussed above are examples. Various configurations may omit, substitute, or add various procedures or components as appropriate. For instance, in alternative configurations, the methods may be performed in an order different from that described, and/or various stages may be added, omitted, and/or combined. Also, features described with respect to certain configurations may be combined in various other configurations. Different aspects and elements of the configurations may be combined in a similar manner. Also, technology evolves and, thus, many of the elements are examples and do not limit the scope of the disclosure or claims.

Specific details are given in the description to provide a thorough understanding of exemplary configurations including implementations. However, configurations may be practiced without these specific details. For example, well-known circuits, processes, algorithms, structures, and techniques have been shown without unnecessary detail in order to avoid obscuring the configurations. This description provides example configurations only, and does not limit the scope, applicability, or configurations of the claims. Rather, the preceding description of the configurations will provide those skilled in the art with an enabling description for implementing described techniques. Various changes may be made in the function and arrangement of elements without departing from the spirit or scope of the disclosure.

Having described several example configurations, various modifications, alternative constructions, and equivalents may be used without departing from the spirit of the disclosure. For example, the above elements may be components of a larger system, wherein other rules may take precedence over or otherwise modify the application of the technology. Also, a number of steps may be undertaken before, during, or after the above elements are considered. Accordingly, the above description does not bind the scope of the claims.

As used herein and in the appended claims, the singular forms "a", "an", and "the" include plural references unless the context clearly dictates otherwise. Thus, for example, reference to "a user" includes reference to one or more of such users, and reference to "a processor" includes reference to one or more processors and equivalents thereof known to those skilled in the art, and so forth.

Also, the words "comprise," "comprising," "contains," "containing," "include," "including," and "includes," when used in this specification and in the following claims, are intended to specify the presence of stated features, integers, components, or steps, but they do not preclude the presence or addition of one or more other features, integers, components, steps, acts, or groups.

It is also understood that the examples and embodiments described herein are for illustrative purposes only and that various modifications or changes in light thereof will be suggested to persons skilled in the art and are to be included within the spirit and purview of this application and scope of the appended claims.

## Claims

1. A method of localizing an interference signal relative to a global navigation satellite system (GNSS) receiver, the method comprising:
collecting, at a first time, a first phase difference measurement using a first antenna and a second antenna of the GNSS receiver and a first angle measurement using an inertial sensor of the GNSS receiver;
collecting, at a second time after the first time and after the GNSS receiver has been at least partially moved or rotated, a second phase difference measurement using the first antenna and the second antenna and a second angle measurement using the inertial sensor;
computing an angle offset between the first angle measurement and second angle measurement;
searching a phase difference map using the first phase difference measurement, the second phase difference measurement, and the angle offset to identify a compatible set of phase differences in the phase difference map, the phase difference map including a plurality of phase differences indexed by vertical and/or horizontal angles, wherein the compatible set of phase differences are separated in the phase difference map by the angle offset; and
estimating, based on the compatible set of phase differences, an angle of arrival of the interference signal relative to the GNSS receiver.

2. The method of claim 1, further comprising:
storing the phase difference map at a memory of the GNSS receiver, the phase difference map having been obtained through a calibration process or from electromagnetic simulation.

3. The method of claim 1 or 2, further wherein estimating the angle of arrival of the interference signal based on the compatible set of phase differences includes determining the vertical and/or horizontal angles that index the compatible set of phase differences in the phase difference map or similarly using a parametrized map phase difference map.

4. The method of any one of the preceding claims, wherein the angle of arrival of the interference signal includes one or both of a horizontal angle and a vertical angle.

5. The method of any one of the preceding claims, wherein the angle offset includes one or both of a horizontal angle offset and a vertical angle offset.

6. The method of any one of the preceding claims, wherein searching the phase difference map to identify the compatible set of phase differences includes:
for each of a plurality of candidate sets of phase differences in the phase difference map:
computing a first error between the first phase difference measurement and a first phase difference from the plurality of phase differences;
computing a second error between the second phase difference measurement and a second phase difference from the plurality of phase differences, the second phase difference being separated from the first phase difference in the phase difference map by the angle offset; and
computing a combined error by combining the first error and the second error; and
identifying the compatible set of phase differences as having the combined error being the minimum value of the plurality of candidate sets of phase differences.

7. The method of any one of the preceding claims, wherein the inertial sensor is an inertial measurement unit (IMU) mounted to the GNSS receiver.

8. The method of any one of the preceding claims, further comprising:
causing the angle of arrival of the interference signal to be displayed on a display of a user device.

9. A non-transitory computer-readable medium comprising instructions that, when executed by one or more processors, cause the one or more processors to perform the method of any one of the preceding claims for localizing an interference signal relative to a global navigation satellite system (GNSS) receiver.

10. A system comprising:
one or more processors; and
a computer-readable medium comprising instructions that, when executed by the one or more processors, cause the one or more processors to perform operations for localizing an interference signal relative to a global navigation satellite system (GNSS) receiver, the operations comprising:
collecting, at a first time, a first phase difference measurement using a first antenna and a second antenna of the GNSS receiver and a first angle measurement using an inertial sensor of the GNSS receiver;
collecting, at a second time after the first time and after the GNSS receiver has been at least partially moved or rotated, a second phase difference measurement using the first antenna and the second antenna and a second angle measurement using the inertial sensor;
computing an angle offset between the first angle measurement and second angle measurement;
searching a phase difference map using the first phase difference measurement, the second phase difference measurement, and the angle offset to identify a compatible set of phase differences in the phase difference map, the phase difference map including a plurality of phase differences indexed by vertical and/or horizontal angles, wherein the compatible set of phase differences are separated in the phase difference map by the angle offset; and
estimating, based on the compatible set of phase differences, an angle of arrival of the interference signal relative to the GNSS receiver.

11. The system of claim 10, wherein the operations further comprise:
storing the phase difference map at a memory of the GNSS receiver, the phase difference map having been obtained through a calibration process.

12. The system of claim 10 or 11, further wherein estimating the angle of arrival of the interference signal based on the compatible set of phase differences includes determining the vertical and/or horizontal angles that index the compatible set of phase differences in the phase difference map.

13. The system of any one of claims 10-12, wherein the angle of arrival of the interference signal include one or both of a horizontal angle and a vertical angle, and wherein the angle offset includes one or both of a horizontal angle offset and a vertical angle offset.

14. The system of any one of claims 10-13, wherein searching the phase difference map to identify the compatible set of phase differences includes:
for each of a plurality of candidate sets of phase differences in the phase difference map:
computing a first error between the first phase difference measurement and a first phase difference from the plurality of phase differences;
computing a second error between the second phase difference measurement and a second phase difference from the plurality of phase differences, the second phase difference being separated from the first phase difference in the phase difference map by the angle offset; and
computing a combined error by combining the first error and the second error; and
identifying the compatible set of phase differences as having the combined error being the minimum value of the plurality of candidate sets of phase differences.

15. The system of any one of claims 10-14, wherein the operations further comprise:
causing the angle of arrival of the interference signal to be displayed on a display of a user device.
